Europäisches Patentamt

European Patent Office

Office européen des brevets

(11) Publication number: **0 126 388**
**B1**

# EUROPEAN PATENT SPECIFICATION

(12)

(45) Date of publication of patent specification: **08.11.89**

(21) Application number: **84105288.9**

(22) Date of filing: **10.05.84**

(51) Int. Cl.⁴: **G 05 B 19/23**

(54) Method of controlling a numerically controlled machine tool.

(30) Priority: **13.05.83 JP 82684/83**
**21.11.83 JP 217822/83**

(43) Date of publication of application:
**28.11.84 Bulletin 84/48**

(45) Publication of the grant of the patent:
**08.11.89 Bulletin 89/45**

(84) Designated Contracting States:
**DE GB**

(56) References cited:
**EP-A-0 047 853**
**EP-A-0 072 687**
**WO-A-82/00906**
**US-A-3 574 292**
**US-A-3 596 153**
**US-A-4 365 301**

(73) Proprietor: **HITACHI, LTD.**
**6, Kanda Surugadai 4-chome Chiyoda-ku
Tokyo (JP)**

(72) Inventor: **Nagayama, Kazuhiko
Isshiki 1868 Hayama-cho
Miura-gun Kanagawa-ken (JP)**
Inventor: **Masuda, Masami
Akaseki Mansion 101 Kami kashio-cho
523, Yokohama-shi Kanagawa-ken (JP)**
Inventor: **Maeda, Yukio
Kounandai Prince Heights 7-102 Kami gou-cho
262-32
Yokohama-shi Kanagawa-ken (JP)**

(74) Representative: **Patentanwälte Beetz sen. -
Beetz jun. Timpe - Siegfried - Schmitt-Fumian
Steinsdorfstrasse 10
D-8000 München 22 (DE)**

## Description

Background of the invention

This invention relates to a method of working a workpiece by a cutting tool according to the first portion of the claim.

There is known a method for controlling a NC-machine tool, which uses a liner encorder for directly detecting the position of the motor driven table. In this method, however, the control of the table position is apt to be influenced by the backlash between the guide screw and the nut when the direct-driving typed detector is used in high resolvability like a sub-micron order because the table is repeatedly moved back and forth near the predetermined position.

It has been proposed another method of working a workpiece into a predetermined figure with a high accuracy by a NC-machine tool on the base of an instruction tape which contains tool path instructions and working condition instructions. After a first finishing process the workpiece is taken off from the workholder provided of the machine tool to measure the figure of the workpiece by a three-dimensional measuring machine. If there is a larger error than the predetermined tolerance in the figure of the workpiece, the workpiece is fitted up into the workholder again, so that the machine tool works the workpiece on the base of the new instruction tape made out in consideration of the error on the figure of the workpiece as the second finishing process. But in this method, although the error on the figure of the workpiece is measured with high accuracy, it will be almost impossible to exclude from the feedback signal the errors caused by the setting condition of the machine tool or the normal error like a movement error of the table or a thermal strain in the machine tool because the measurement is executed by a measuring system which is different from the working system. Further disadvantages are the long time to fit up the workpiece into the work holder again with so high degree of accuracy that the former condition is reproduced.

The JP—A—138533/56 discloses a method of working a workpiece which is measured on a machine tool without being taken off from the machine tool. This method, however, is not applicable to a workpiece having a worked face symmetrical with respect to a rotation axis.

From the US—A—4 365 301 it is known a fine positioning system for the working of a workpiece in a numerical controlled tool machine. By said system the positions of an optical flat, a tool and the workpiece are measured by using laser beams and interferometers, so that the relative displacements between the workpiece and the machine tool can be detected with high accuracy. But it is impossible by using this system to detect the special figure of the workpiece during the working operation so that some errors take place and the workpiece has to take off from the tool machine and to measure its figure outside of the machine.

In the WO—A—82/00 906 is disclosed the tridimensional working of a work piece by a machine tool, in which the motor driven cutting tool is movably supported by pivot arms and can be moved by the hand of an operator in two degrees of freedom. A tridimensional topologically described model of the work piece is memorized in a computer. During the working process the memorized data of the model-contour will be compared with the actual position of the cutting tool and the operator will be guided by a computer screen. Instead of the cutting tool the post may also provided with a sensor for measuring the shape of the workpiece and storing the shape data in the computer.

The EP—A—0 072 687 discloses a method for machining a workpiece in a NC-machine tool with automatically setting the cutting tool and measuring the surface of the work piece. The cutting edge of the tool is calibrated against position reference surfaces under closed loop control. The deviation between the programmed and the actual positions of the cutting edge at each reference surface is determined and an initial compensating tool position offset is automatically in each axis and is entered into the NC-unit. After machining has been initiated, probing of the work piece occurs at least once before the final cut is taken. The tool function as a tool touch probe during this operation and vibrations are sensed as the calibrated cutting edge is brought in contact with the machined surface. Tool position offsets are determined and entered in the NC-unit at that time, to assure that the dimensions of the finished surface will conform to the desired dimensions. With this machining method it is impossible to analyse the different kinds of errors, as setting errors, working errors.

It is the object of the invention to provide a method of controlling a numerically controlled machine tool for working a workpiece with an improved control precision of a cutting tool path by measuring and analysing machining errors of the workpiece with a high degree of accuracy during the working operation.

This object will be solved according to the invention by the features of the second portion of the claim.

The invention will be in more detail explained hereafter in referring to the accompanying drawing.

Figure 1 is a general block schematic showing the basic components present in an illustrative numerical control system embodying the features of the invention.

Figure 2 is a detailed block diagram of the components of the numerically controlling apparatus in Figure 1 with the relation to the laser measuring machine and the detectors.

Figure 3 is a graphical representation of the controlled path for explaining the control method of the invention.

Figure 4 is a flow chart of the process of the invention applied to a numerically controlled lathe.

Figure 5 is a graphical representation showing one of the methods of working a workpiece.

Figure 6 is a graphical representation showing one of the methods of measuring a workpiece.

Figure 7 is a graphical representation for explaining an analytic method of a measuring error.

Figure 8 is a flow chart of the analytic method of the measuring error.

Figure 9 is a graphical representation for explaining an analytic method of a working error.

Figure 10 is a flow chart of the analytic method of the working error.

Figure 11 is a graphical representation for explaining an analytic method of setting errors.

Figure 12 is a flow chart of the analytic method of the setting errors.

Figure 13 is a flow chart showing another process of the invention applied to a numerically controlled lathe.

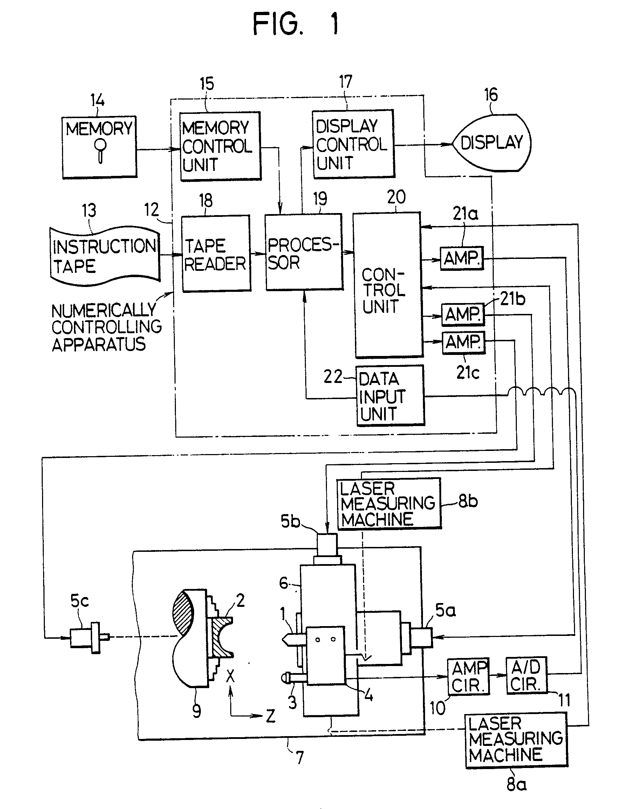

Figure 1 shows a general block diagram of the numerically controlled machined tool of applicant's invention wherein the general configuration of a numerically controlled lathe having two axes controlled is illustrated. A cutting tool 1 and a micro displacement meter 3 are fixed on a tool base 4 so that the meter 3 is located at an appropriate interval from the cutting tool 1 in an X direction and has the same height in a Z direction as the cutting tool 1. The tool base 4 is fixed on an X-Z table 6 which is moved in the X and Z directions by driving motors 5a, 5b. The X-Z table 6 is movably mounted on a machine body 7 mounting a work holder 9 rotated by a spindle driving motor 5c for chucking and rotation a workpiece 2 at the opposite side to the cutting tool 1 and laser measuring machines 8a, 8b for respectively measuring moving distances of the X-Z table 6 in the X and Z directions. The micro displacement meter 3 is connected to a numerically controlling apparatus 12 through an amplification circuit 10 and an analog-digital converting circuit 11 so that the output signal from the meter 3 is amplified by the amplification circuit 10 and converted to a digital signal by the converting circuit 11 and provided to the controlling apparatus 12. The controlling apparatus 12 is provided for controlling the driving motors 5a, 5b, 5c in accordance with the working information such as a path control instruction of the cutting tool 1 and a work condition instruction for working the workpiece 2 into a predetermined figure, and measure control instruction of the micro displacement meter 3 for measuring a figure of the workpiece 2 in keeping the workpiece 2 on the workholder 9 which are previously programmed and filed in an instruction tape 13. This numerically controlling apparatus 12 comprises a memory controlling unit 15 for reading from a memory 14 working informations such as a curved surface constant of a cross section of the workpiece 2 and a correction pattern table which are registered and stored in the memory 14, a display controlling unit 17 for putting out various processing results to a display machine 16, a tape reader 18 for reading the instructions mentioned above from the instruction tape 13, a processor 19 for making out and putting out various control instructions to move the X-Z table 6, the cutting tool 1 or the meter 3 in accordance with the instructions input from the instruction tape 13 and for executing a calculation process to analyze working errors on the workpiece 2 and to amend the correction pattern table for correcting a path of the cutting tool 1, a control unit 20 connected to the laser measuring machines 8a, 8b for controlling the driving motors 5a, 5b, 5c to move or rotate the X-Z table 6 and the workholder 9 in accordance with the control instructions provided by the processor 19, amplifier units 21a, 21b, 21c for amplifying and converting output signals from the control unit 20 to driving signals for the driving motors 5a, 5b, 5c, and a data input unit 22 for providing to the processor 19 a data information from the analog-digital converting circuit 11.

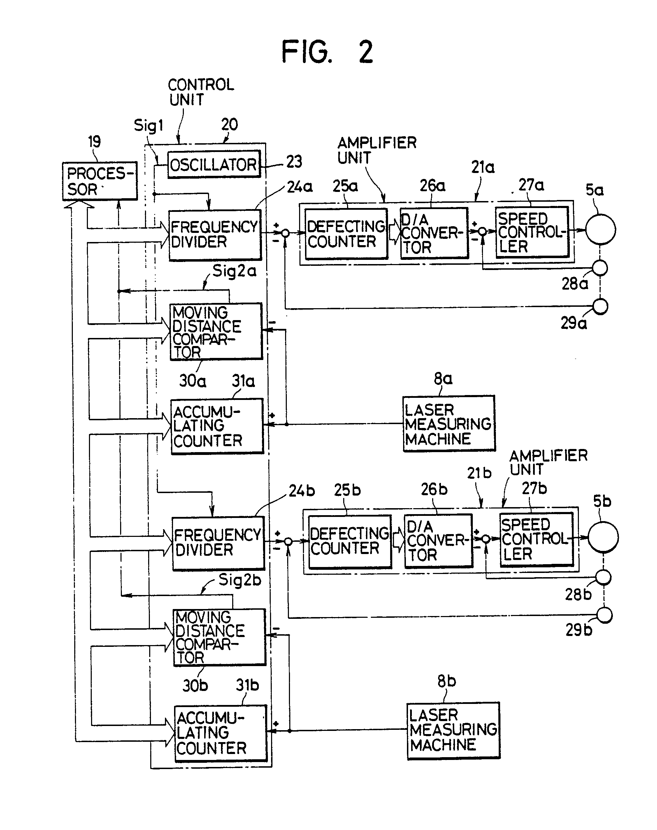

Figure 2 discloses a more detailed block diagram of the components of the numerically controlling apparatus 12 which are engaged in controlling the X-Z table 6. There are provided in the control unit 20, an oscillator 23 generating a clock signal Sig 1 in a predetermined cycle, frequency dividers 24a, 24b for demultiplying the clock signal Sig 1 in accordance with the control instruction from the processor 19, moving distance comparators 30a, 30b for comparing the moving distances of the X-Z table 6 measured by the laser measuring machines 8a, 8b and the control instruction values from the processor 19 to generate coincidence signals Sig 2a, Sig 2b at the time when the moving distances are equal to the control instruction values, and accumulating counters 31a, 31b for accumulatively counting the moving distances of the X-Z table 6 measured by the laser measuring machines 8a, 8b. And there are provided in the amplifier units 21a, 21b, deflecting counters 25a, 25b for counting the difference between line signals of the clock signal Sig 1 and detected signals by position detectors 29a, 29b connected to the driving motors 5a, 5b, digital-analog convertors 26a, 26b for converting to analog signals the digital signals from the deflecting counters 25a, 25b, and speed controllers 27a, 27b for controlling the speeds of the driving motors 5a, 5b so as to always coincide the output signals from the convertors 26a, 26b with the detected signals by speed detectors 28a, 28b provided between the position detectors 29a, 29b and the driving motors 5a, 5b for moving the X-Z table 6 in the X and Z directions.

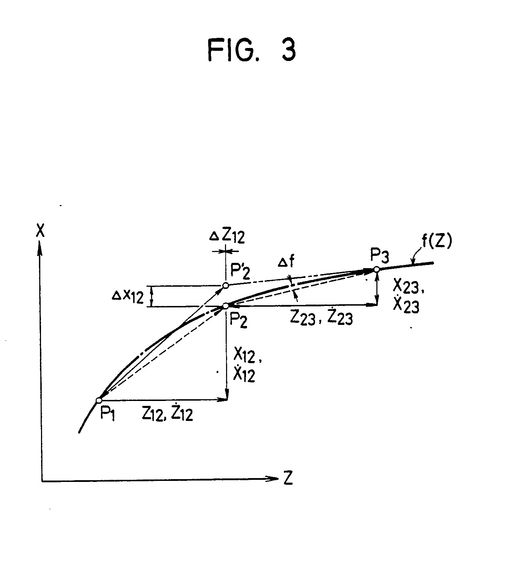

The control system described above is operated as follows: In the case that the X-Z table 6 is arranged to move along the curved line f(Z) represented by a dot-dash-line in Figure 3 in accordance with the path control instruction from the instruction tape 13, first of all, the processor 19 calculates the absolute coordinate values $(Z_1, X_2)$, $(Z_2, X_2)$, ... of the points $P_1$, $P_2$, ..., the distances between adjacent points $Z_{12}$, $Z_{23}$, ... in the Z direction, $X_{12}$, $X_{23}$, ... in the X direction and the speeds between adjacent points $\dot{Z}_{12}$, $\dot{Z}_{23}$, ...

in the Z direction, $X_{12}$, $X_{23}$, ... in the X direction so that the error $\Delta F$ between the curved line $F_{(z)}$ and the controlled path line represented by a broken line is within a desired value. After this calculation, the calculated distance values $Z_{12}$ and $X_{12}$ are respectively supplied to the moving distance comparators 30a and 30b, and the calculated speed values $\dot{Z}_{12}$ and $\dot{X}_{12}$ are respectively supplied to the frequency dividers 24a and 24b, so that the driving motors 5a and 5b are rotated respectively at the appropriate speeds and to the appropriate amounts. Meanwhile, actual moving distances of the X-Z table 6 are detected by the laser measuring machines 8a and 8b. The calculated distance values $Z_{12}$ and $X_{12}$ are respectively compared with the measured distance values at the moving distance comparators 30a and 30b to obtain the positioning errors $\Delta X_{12}$ and $\Delta Z_{12}$ at the processor 19 by watching one of the coincidence signals Sig 2a and Sig 2b. Figure 3 shows the case that the coincidence signal Sig 2a of the Z direction is outputted to the processor 19. In this case, the absolute coordinate value $(Z'_2, X'_2)$ of the point $P'_2$ are read from the accumulating counters 31a and 31b to calculate the positioning errors $\Delta X_{12}$ and $\Delta Z_{12}$ between the point $P_2$ and the point $P'_2$. If the positioning errors $\Delta X_{12}$ and $\Delta Z_{12}$ are smaller, than the desired tolerances, the calculated distance values $X_{23}$ and $Z_{23}$ and the calculated speed values $\dot{X}_{23}$ and $\dot{Z}_{23}$ are outputted to move the X-Z table 6 to the next position. If the positioning error $\Delta X_{12}$ or $\Delta Z_{12}$ is larger than the desired tolerance, the distance $X'_{23}$ or $Z'_{23}$ and the speed $\dot{X}'_{23}$ or $\dot{Z}'_{23}$ are newly calculated at the processor 19 in correcting the positioning error $\Delta X_{12}$ or $\Delta Z_{12}$ and outputted to move the X-Z table 6 to the next position. The process mentioned above is repeated in the range of controlling the X-Z table.

As shown in this embodiment of the invention, the invention has the effect that the table, therefore the cutting tool, is controlled and positioned with a high degree of precision because the mechanical errors like a backlash caused between a nut and a guide screw are completely rejected by correcting the positioning error between the target position and the actual position of the table when the table is moved to the next position. Further, in this method, the actual position of the table is directly detected by a laser measuring machine with supplying the position signal generated from the position detector connected to the driving motor to the defecting counter in the servo system so that the table is controlled and positioned with a high degree of accuracy.

Though the case wherein both errors in the X and Z direction are corrected is disclosed above in the embodiment of the invention, almost the same effect will be obtained even if the error only in the direction of which the coincidence signal is not generated is corrected, because the error in the other direction of which the coincidence signal is generated may be very small.

Further this method may be executed by using a direct speed instruction method wherein the speed information from the speed detector is directly supplied to the speed controller without the frequency divider, the defecting counter and the position detector.

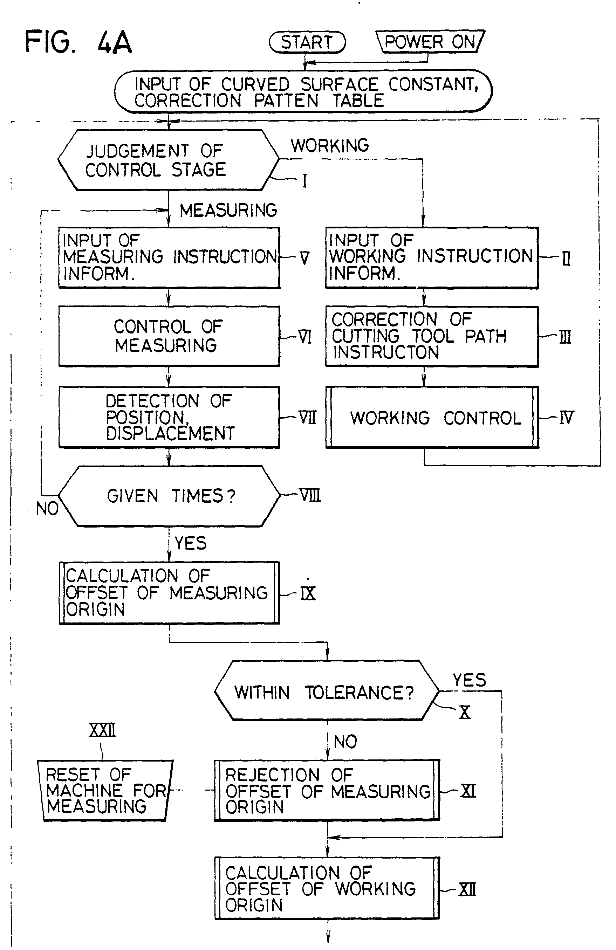

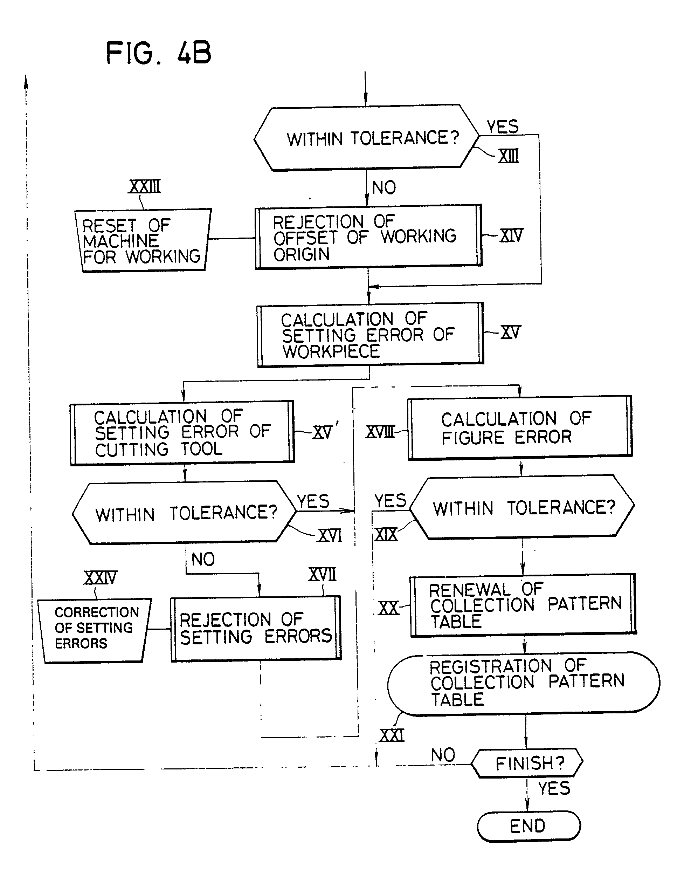

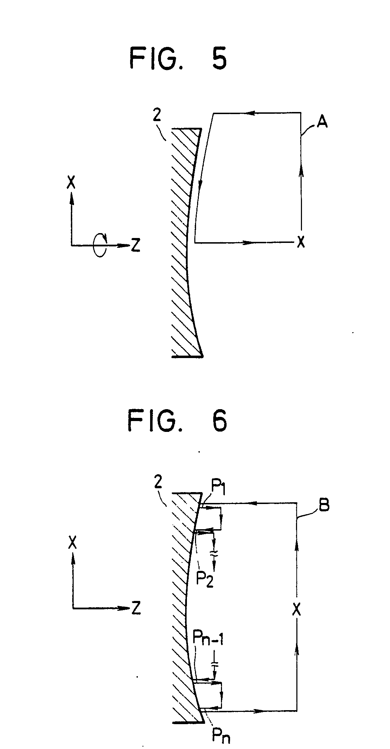

There will be hereafter explained the process of the invention for remaking or correcting the path control instruction of the cutting tool on the basis of measuring the figure of the workpiece. Figure 4 shows the flow chart of the process in the case when the invention is applied to a numerically controlled lathe. Figure 5 illustrates one of the methods of working the workpiece and Figure 6 illustrates the method of measuring the workpiece worked by the method shown in Figure 5. After rough working the workpiece 2 to some degree of a figure precision, the first finishing work instruction is given to the numerically controlling apparatus 12, so that the numerically controlling apparatus 12 judges it to be the working stage [STEP I] and inputs the working instruction information from the instruction tape 13 [STEP II], and makes a new cutting tool path control instruction by adding the correction pattern table information stored in the memory 14 to the instruction information [STEP III] to execute a working control in the control method mentioned previously [STEP IV]. In this stage, for example, the first finishing working is executed by controlling the cutting tool 1 along the working path A shown in Figure 5. After this first finishing work is completed, the measuring instruction is given to numerically controlling apparatus 12, so that the numerically controlling apparatus 12 judges it to be the measuring stage [STEP I] and inputs the measuring instruction information from the instruction tape 13 [STEP V], and measures the figure of the workpiece 2 at the measuring points $P_1$, $P_2$, ..., Pn provided at appropriate intervals on the workpiece 2 (as shown in Figure 6) by controlling and positioning the micro displacement meter 3 along the measuring path B shown in Figure 6 [STEP VI] to detect the position of the X-Z table 6 and the displacement of the micro displacement meter 3 [STEP VII]. This measuring process is executed in keeping the workpiece 2 held by the workholder 9, namely which means an on-the machine-measuring. The measuring values obtained through these steps involves the measuring error caused the offset of the measuring origin to the rotation axis of the workpiece 2, the working error caused by the offset of the working origin to the rotation axis of the workpiece 2, the workpiece setting error caused by the inclination of the rotation axis of the workpiece 2 to the Z direction and the cutting tool setting error caused by the relative position of the cutting tool 1 to the workpiece 2 in the Z direction. These errors do not come directly from the control factors in the working process but the setting factors which may be corrected by resetting the machine. The feature of the process of the invention resides in that the working process is executed by numerically controlling the path of the cutting tool on the basis of the numerical values which contain only the errors caused by the working conditions after rejecting the errors caused by the setting conditions. In this embodiment of the invention, the errors caused by the setting conditions are calculated and rejected from the measuring values in order of largeness. Therefore these errors are calculated from the measuring values in order of the ① the measuring error, ② the working error, ③ the workpiece setting error and ④ the cutting tool setting error, by the methods mentioned after and rejected from the measuring values if the errors are larger than the predetermined tolerance. Further, these errors are corrected by resetting or rearranging the machine. This process will be explained as follows with reference to Figure 4. After repeating the measuring steps [STEP V~VII] to the given times [STEP VIII], first of all, the measuring error is calculated [STEP IX], judged whether within the tolerance or not [STEP X] and rejected from the measuring values if it it larger than the tolerance [STEP XI]. The same steps are executed for the working error [STEP XII~XIV] and for the workpiece setting error and the cutting tool setting error [STEP XV, XV'~XVII]. Through the steps mentioned above, the errors caused by the setting conditions of the machine are rejected from the measuring values so that the figure errors to the predetermined figure of the workpiece 2 are calculated from the measuring values which contain only the errors caused by the working conditions [STEP XVIII]. If the figure errors calculated in STEP XVIII are larger than the desired values, the correction pattern table of each path control instruction is renewed in consideration of the figure errors [STEP XIX, XX] and newly registered in the memory 14 [STEP XXI], and the machine is also reset or rearranged to correct the setting factors which caused the offsets of the measuring origin and the working origin and the setting errors of the workpiece and the cutting tool at the first finishing work [STEP XXII~XXIV].

After this measuring stage, the second finishing work instruction is given to the numerically controlling apparatus 12. At the second finishing work, the workpiece 2 is worked with a higher degree of accuracy because the errors caused by the setting factors at the first finishing work were excluded.

Below is the explanation on the analytic methods of the errors caused by the setting conditions of the machine.

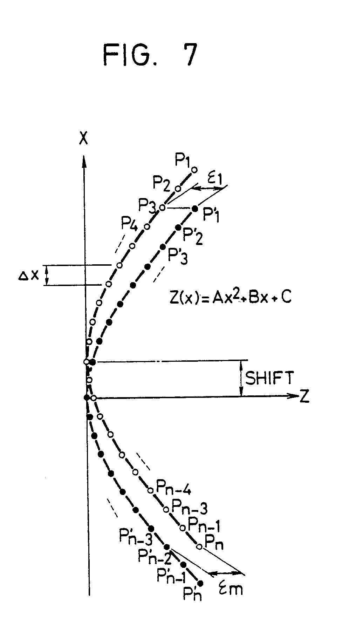

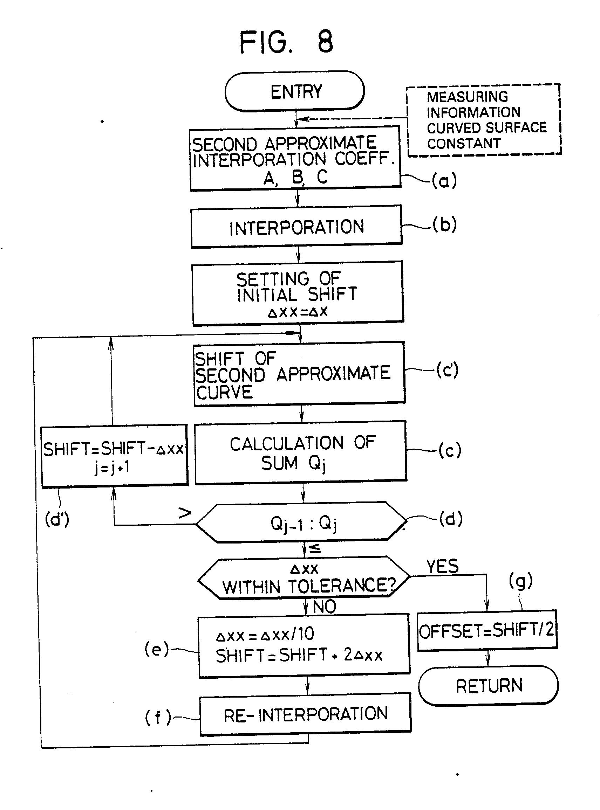

Firstly, the analytic method of the measuring error caused by the offset of the measuring origin is explained in referring to Figure 7 and Figure 8. Figure 7 shows a graphical representation for explaining the analytic method of the measuring error and Figure 8 shows a flow chart of the analytic method of the measuring error.

Though it is preferable that the sampling interval $\Delta x$ of the measuring points $P_1, P_2, \ldots, P_n$ is provided by a millimeter order to shorten a measuring time, it is necessary to avoid a positional difference between the measuring points and a compared curve which is contrasted with the measuring points. Therefore, in this embodiment of the invention, a second approximate curve is substituted for the compared curve to shorten a processing time. Second approximately interporation coefficients $A_1, B_1, C_1$ are acquired from the measuring values of three measuring points $P_1, P_2, P_3$ [STEP (a)] so that the space between $P_1$ and $P_2$ can be interporated by the second approximate curve

$$Z_1(x) = A_1 X^2 + B_1 X + C_1 \text{ [STEP (b)]}.$$

By the same process, second approximate interporation coefficients are acquired to interporate a whole space in the measuring area by the second approximate curve. Next the second approximate curve is in advance shifted with as much as an appropriate value (SHIFT) in the radius direction (x direction) [STEP (C'')]. The sum $Q_j$ of the secure errors between the measuring points and the shifted second approximate curve is calculated every time when the second approximate curve is shifted little by little. Meanwhile the sum $Q_j$ is compared with the sum $Q_{j-1}$ which is calculated at one shift before and the second approximate continues to be shifted until the sum $Q_j$ is more than the sum $Q_{j-1}$ ($Q_j \geq Q_{j-1}$) [STEP (d)]. If the sum $Q_j$ is more than the sum $Q_{j-1}$ and a data interporating interval $\Delta xx$ is not within a tolerance, the data interporating interval $\Delta xx$ is changed smaller (for example $\Delta xx \rightarrow \Delta xx/10$) and the SHIFT is turned two back [STEP (e)] and the space between the measuring points is re-interporated by the second approximate curve with using the interporation coefficients calculated in STEP (a) and (b). The process mentioned above is repeated until the sum $Q_j$ is the minimum and the data interporating interval xx is within the tolerance. Then 1/2 of the SHIFT is decided to be the offset of the measuring origin. In this process, it is preferable that the initial SHIFT is at least more than the sampling interval $\Delta x$, and the information necessary for this process is previously given.

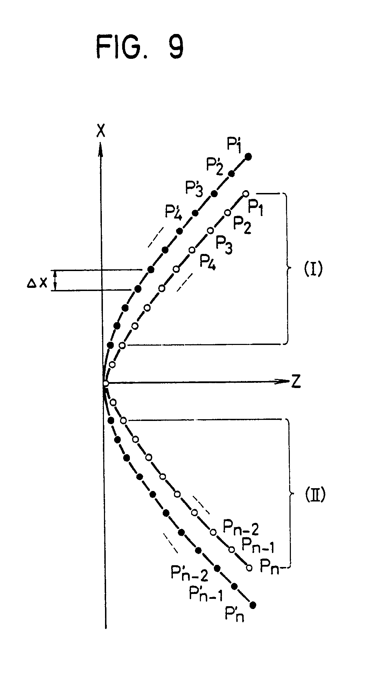

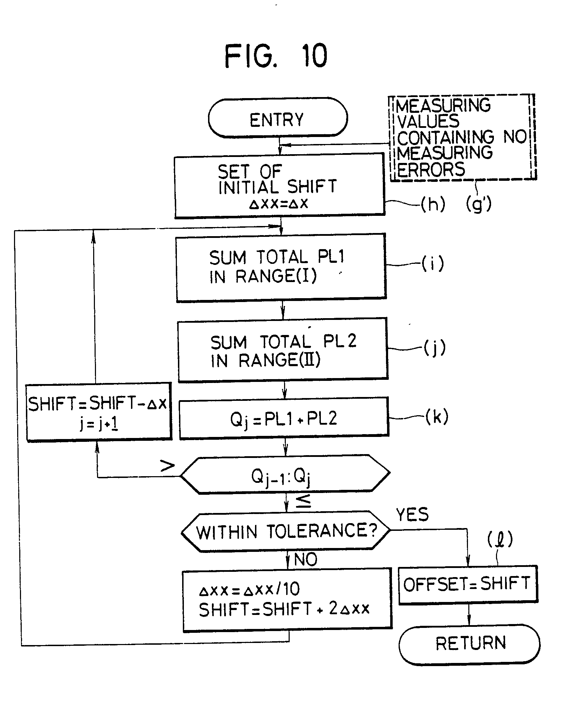

Secondly, the analytic method of the working error caused caused by the offset of the working origin is explained in referring to Figure 9 and Figure 10. Figure 9 shows a graphical representation for explaining the analytic method of the working error and Figure 10 shows a flow chart of the analytic method of the working error. An analysis scope is divided into two ranges, the first range (I) and the second range (II), on the center of the measuring points. After the initial shift is set to be at least more than the sampling interval $\Delta x$ and the data interporating interval $\Delta xx$ is set to be equal to the sampling interval $\Delta x$ [STEP (h)], the sum total PL 1 of squared errors between the ideal section curve and the measuring values in the first range (I) and the sum total PL 2 of squared errors between the ideal section curve and the measuring values in the second range (II) are calculated through the same procedure as mentioned in the explanation of the analytic method of the measuring error shown in Figure 8 [STEP (i), (j)]. Next, the ideal section curve is little by little shifted in a radius direction (x direction) until the sum Qj of the sum total PL 1 and PL 2 in STEP (k) becomes to be a minimum value. Lastly the offset of the working origin is determined at the time when the sum Qj becomes to be a minimum value [STEP (l)]. In this method, the measuring errors are in advance rejected from the measuring values by the method previously mentioned [STEP (g')].

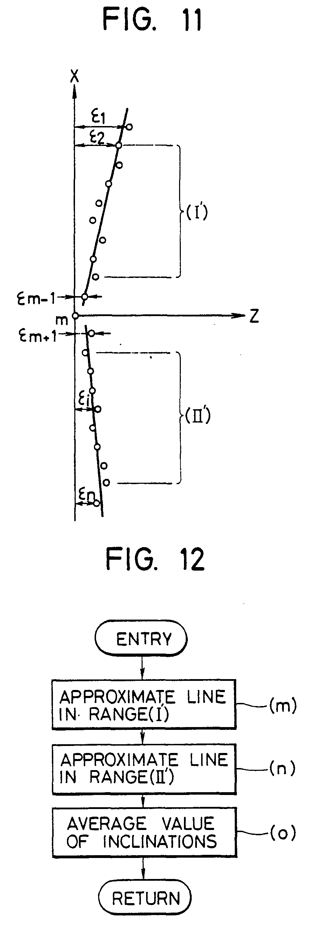

Thirdly, the analytic method of the setting errors caused by the inclination of the rotation axis of the workpiece is explained in referring to Figure 11 and Figure 12. Figure 11 shows a graphical representation for explaining the analytic method of the setting errors and Figure 12 shows a flow chart to this method. An analysis scope is divided into two ranges, the first range (I') and the second range (II'), on the center error $\varepsilon_m$ of the errors $\varepsilon_1, \varepsilon_2, \ldots, \varepsilon_m$ between the ideal section curve and the measuring values which contain no measuring errors and working errors. The first approximate line is determined from the errors $\varepsilon_1 \sim \varepsilon_{m_m} - 1$ in the first range (I') [STEP (m)] and next the second approximate line is determined from the errors $\varepsilon_m + 1 \sim \varepsilon_n$ in the second rang (II') [STEP (n)]. Lastly the average value of the inclinations of the first and the second approximate lines is determined to be the inclination of the rotation axis of the workpiece [STEP (o)].

According to this embodiment of the invention, as mentioned above, the path control instruction information can be acquired with a high degree of accuracy and in a short time because the figure measuring of the workpiece is executed by on-the machine-measurement, which does not need taking off the workpiece from the workholder and resetting the workpiece into the workholder, to reject such a kind of errors from the measuring values that could not be rejected if the measuring system was different from the working system.

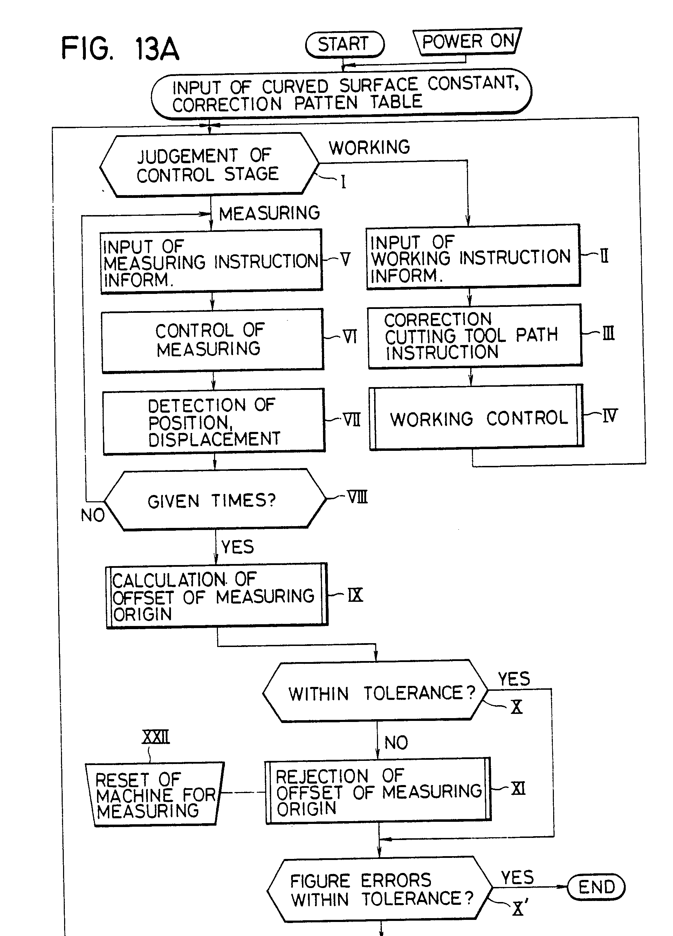

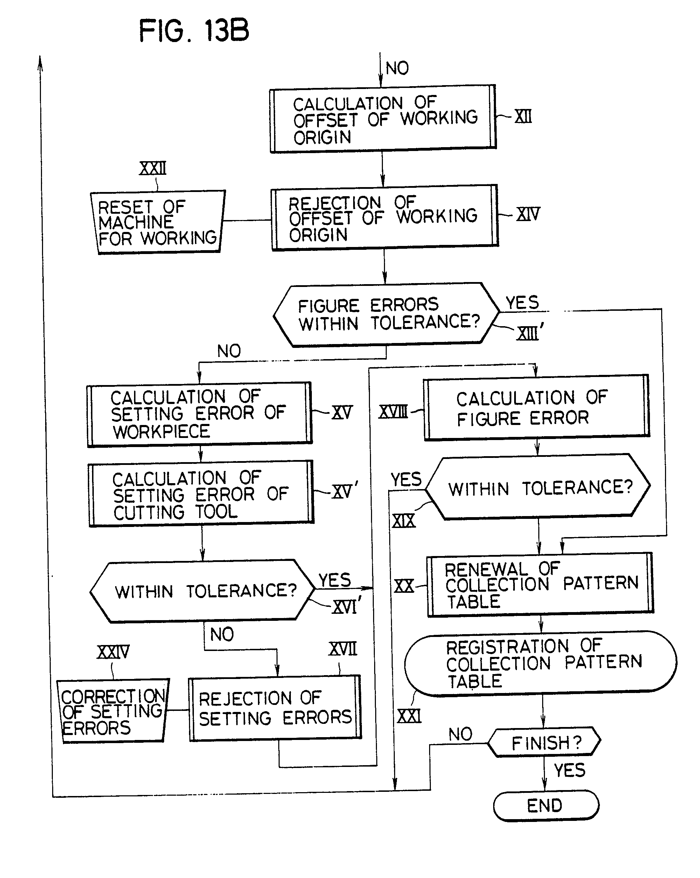

Though Figure 4 shows the process of the error analysis which calculates or analyses the errors in order [STEP IX~XVII], another process may be proposed as follows because the setting errors are seldom caused if the workpiece or the cutting tool is correctly reset once. Figure 13 shows another process of the error analysis. STEP I~XI are the same as in the process shown in Figure 4. After STEP XI, namely rejecting the measuring errors from the measuring values, the figure errors are calculated and decided whether to be within the tolerance or not [STEP X']. The analytic process and the working control are ended if the figure errors are within the tolerance and the working errors are calculated if the figure errors are not within the tolerance [STEP XII]. Successively, after rejecting the working errors [STEP XIV], the figure errors are again calculated and decided whether to be within the tolerance or not [STEP XIII']. The process passes to the renewal of the correction pattern table [STEP XX] without the steps on the setting errors if the figure errors are within the tolerance and the steps on the setting errors [STEP XV~XVII] are executed as in the process shown in Figure 4. This another process has not only the same effect as in the process shown in Figure 4 but also the additional effect that the time for the error analysis is much shortened.

In the embodiments of this invention, the machine are reset by a hand of a worker to correct the caused by the setting conditions. But measuring error caused by the offset of the measuring origin and the working error caused by the offset of the working origin may be corrected not only by a hand but also by correcting a positional information in the instruction tape so that the resetting of the machine can be automatically executed.

The invention can be also applicable to a numerically controlled machine tool which works a workpiece by rotating a cutting tool relative to the workpiece.

Further, it is apparent that the workpiece which has a hollow hole along a rotating axis can be worked by the method of this invention.

According to the invention, as mentioned above, the normal errors like a backlash of a feed system or a thermal strain of a mechanical system can be rejected in controlling a numerically controlled machine tool to work a workpiece because the next instruction signal is corrected in consideration of the positional error between a actual position and an instructed position of the table to always move the table in the same direction so that the workpiece is worked with a high degree of accuracy. Further, the errors caused by the setting conditions of the machine are previously rejected from the measuring values obtained by on the machine-measuring to control the machine on the basis of the measuring values which contain only errors caused by the working conditions.

The preferred embodiments described herein are illustrative and not restrictive, the scope of the invention being indicated by the appended claims and all variations which come within the meaning of the claims are intended to be embraced therein.

**Claim**

A method of controlling a numerically controlled machine tool for working a workpiece by a cutting tool by rotating one of the workpiece and the cutting tool and moving the other to position relative to said one, comprising the steps of:

(1) directly detecting the actual positions of the moved·one of said workpiece and cutting tool in at least two axes;

(2) comparing the actual position information detected by said detecting step (1) with instruction information related to desired positions;

(3) providing a coincidence signal to a controller when the position information in one axis coincides with the instruction information of this axis;

(4) detecting the value of the error between actual and desired positions in the second axis at the instant of said coincidence in the first axis;

(5) correcting a next instruction information for moving said other of said workpiece and cutting tool to a next position on the basis of the value of the detected error;

(6) supplying the next instruction information corrected in said correcting step to driving motors for moving said other of said workpiece and cutting tool always in the same direction and

(7) working the workpiece by the machine tool on the basis of a working information indicating a desired contour of the workpiece, characterized by the following steps

(8) replacing the cutting tool by a micro displacement meter fixed on the tool holder;

(9) measuring the contour of the workpiece worked in said working step (7);

(10) calculating error values based on the deviation between the desired and measured contours;

(11) analysing whether these errors are setting errors of the micro displacement meter, working errors, workpiece setting errors and/or cutting tool setting errors on the basis of a typical configuration of the error;

(12) separately eliminating the errors from the working information;

(13) automatically resetting the machine tool so as to eliminate said setting errors;

(14) reworking the workpiece by the machine tool on the basis of the new working information.

## Patentanspruch

Verfahren zur Steuerung einer numerisch gesteuerten Werkzeugmaschine zur Bearbeitung eines Werkstücks mit einem Schneidwerkzeug durch Drehen entweder des Werkstücks oder des Schneidwerkzeugs und Verschieben des jeweils anderen zur Positionierung relativ zu dem einen, umfassend folgende Schritte:

(1) direktes Messen der Ist-Lagen des jeweils verschobenen Werkstücks oder Schneidwerkzeugs in wenigstens zwei Achsen;

(2) Vergleichen der im Meßschritt (1) gemessenen Ist-Lageninformation mit Befehlsinformation, die sich auf Soll-Lagen bezieht;

(3) Liefern eines Übereinstimmungssignals an eine Steuereinheit, wenn die Lageinformation in einer Achse mit der Befehlsinformation dieser Achse übereinstimmt;

(4) Erfassen der Größe der Abweichung zwischen Ist- und Soll-Lagen in der zweiten Achse im Augenblick der Übereinstimmung in der ersten Achse;

(5) Korrigieren einer nächsten Befehlsinformation zum Verschieben des jeweils anderen von Werkstück oder Schneidwerkzeug in eine nächste Lage auf der Basis des Werts der erfaßten Abweichung;

(6) Liefern der nächsten Befehlsinformation, die im Korrekturschritt korrigiert wurde, an Antriebsmotoren zum Verschieben des jeweils anderen von Werkstück oder Schneidwerkzeug immer in die gleiche Richtung, und

(7) Bearbeiten des Werkstücks durch die Werkzeugmaschine auf der Basis einer Bearbeitungsinformation, die eine gewünschte Kontur des Werkstücks vorgibt, gekennzeichnet durch die folgenden Schritte:

(8) Ersetzen des Schneidwerkzeugs durch einen am Werkzeughalter befestigten Feinverschiebungsmesser;

(9) Messen der in dem Bearbeitungsschritt (7) herausgearbeiteten Werkstückskontur;

(10) Errechnen von Fehlerwerten auf der Basis der Abweichung zwischen den Soll- und den Meßkonturen;

(11) Untersuchen, ob diese Fehler Einstellfehler des Feinverschiebungsmessers, Bearbeitungsfehler, Werkstückeinstellfehler und/oder Schneidwerkzeugeinstellfehler sind, und zwar auf der Basis eine typischen Konfiguration des Fehlers;

(12) jeweils gesondertes Ausschalten der Fehler aus der Bearbeitungsinformation;

(13) automatisches Neueinstellen der Werkzeugmaschine zur Beseitigung dieser Einstellfehler;

(14) Nacharbeiten des Werkstücks durch die Werkzeugmaschine auf der Basis der neuen Bearbeitungsinformation.

## Revendication

Procédé de commande d'une machine-outil à commande numérique pour usiner une pièce d'ouvrage à l'aide d'un outil de coupe en faisant tourner soit la pièce d'ouvrage, soit l'outil de coupe, et en déplaçant l'autre pour le positionner relativement audit premier comportant les étapes consistant à:

(1) détecter directement les positions réelles de l'élément déplacé, soit ladite pièce d'ouvrage, soit ledit outil de coupe, selon au moins deux axes;

(2) comparer l'information de position réelle détectée au cours de ladite étape de détection (1) à une information d'instruction liée à des positions désirées;

(3) délivrer un signal de coïncidence à un organe de commande lorsque l'information de position sur un axe coïncide à l'information d'instruction de cet axe;

(4) détecter la valeur de l'erreur entre des positions réelles et désirées selon le second axe à l'instant de ladite coïncidence selon le premier axe;

(5) corriger une information d'instruction suivante pour déplacer ledit autre élément, soit ladite pièce d'ouvrage, soit ledit outil de coupe, dans une position suivante sur la base de la valeur de l'erreur détectée;

(6) délivrer l'information d'instruction suivante corrigée au cours de ladite étape de correction à des moteurs d'entraînement pour déplacer ledit autre élément, soit ladite pièce d'ouvrage, soit ledit outil de coupe, toujours dans le même sens et

(7) usiner la pièce d'ouvrage sur la machine-outil sur la base d'une information d'usinage indiquant un contour désiré de la pièce d'ouvrage, caractérisé par les étapes suivantes consistant à

(8) remplacer l'outil de coupe par un appareil de mesure de micro-déplacement fixé sur le porte-outil;

(9) mesurer le contour de la pièce d'ouvrage usinée au cours de ladite étape d'usinage (7);

(10) calculer des valeurs d'erreur basées sur l'écart entre les contours désiré et mesuré;

(11) analyser si ces erreurs sont des erreurs de réglage de l'appareil de mesure de micro-déplacement, des erreurs d'usinage, des erreurs de mise en place de la pièce d'ouvrage et/ou des erreurs de mise en place de l'outil de coupe sur la base d'une configuration typique de l'erreur;

(12) éliminer séparément les erreurs de l'information d'usinage;

(13) remettre automatiquement à zéro la machine-outil de manière à éliminer lesdites erreurs de mise en place;

(14) réusiner la pièce d'ouvrage par la machine-outil sur la base de la nouvelle information d'usinage.

EP 0 126 388 B1

# FIG. 1

# FIG. 2

FIG. 3

# FIG. 4A

START — POWER ON

INPUT OF CURVED SURFACE CONSTANT, CORRECTION PATTEN TABLE

JUDGEMENT OF CONTROL STAGE — I

WORKING

MEASURING

INPUT OF MEASURING INSTRUCTION INFORM. — V

INPUT OF WORKING INSTRUCTION INFORM. — II

CONTROL OF MEASURING — VI

CORRECTION OF CUTTING TOOL PATH INSTRUCTON — III

DETECTION OF POSITION, DISPLACEMENT — VII

WORKING CONTROL — IV

GIVEN TIMES? — VIII

NO

YES

CALCULATION OF OFFSET OF MEASURING ORIGIN — IX

WITHIN TOLERANCE? — X

YES

NO

XXII

RESET OF MACHINE FOR MEASURING

REJECTION OF OFFSET OF MEASURING ORIGIN — XI

CALCULATION OF OFFSET OF WORKING ORIGIN — XII

4

EP  0 126 388  B1

# FIG. 4B

WITHIN TOLERANCE? — YES — XIII

NO

XXIII — RESET OF MACHINE FOR WORKING

REJECTION OF OFFSET OF WORKING ORIGIN — XIV

CALCULATION OF SETTING ERROR OF WORKPIECE — XV

CALCULATION OF SETTING ERROR OF CUTTING TOOL — XV'

XVIII — CALCULATION OF FIGURE ERROR

WITHIN TOLERANCE? — YES / XVI

XIX / YES — WITHIN TOLERANCE?

NO

XXIV — CORRECTION OF SETTING ERRORS

XVII — REJECTION OF SETTING ERRORS

XX — RENEWAL OF COLLECTION PATTERN TABLE

REGISTRATION OF COLLECTION PATTERN TABLE — XXI

NO — FINISH?

YES

END

5

# FIG. 5

# FIG. 6

# FIG. 7

$$Z(x) = Ax^2 + Bx + C$$

# FIG. 8

ENTRY

MEASURING
INFORMATION
CURVED SURFACE
CONSTANT

SECOND APPROXIMATE
INTERPORATION COEFF.
A, B, C  —(a)

INTERPORATION  —(b)

SETTING OF
INITIAL SHIFT
$\triangle XX = \triangle X$

SHIFT OF
SECOND APPROXIMATE  —(c')
CURVE

SHIFT = SHIFT − $\triangle xx$
$j = j + 1$

CALCULATION OF
SUM $Q_j$  —(c)

(d')

$>$  $Q_{j-1} : Q_j$  —(d)

$\leq$

$\triangle xx$
WITHIN TOLERANCE?  YES  (g)

NO

$\triangle xx = \triangle xx / 10$
SHIFT = SHIFT + 2$\triangle xx$  (e)

OFFSET = SHIFT/2

RETURN

(f)  RE-INTERPORATION

FIG. 9

# FIG. 10

```
        ┌──────────────┐          ┌─────────────────────┐
        │    ENTRY     │          ┊ MEASURING           ┊
        └──────┬───────┘          ┊ VALUES              ┊
               │                  ┊ CONTAINING NO       ┊
               │                  ┊ MEASURING           ┊
        ┌──────┴───────┐          ┊ ERRORS              ┊
        │   SET  OF    │          └─────────────────────┘
        │ INITIAL SHIFT│───(h)  (g')
        │   Δxx=Δx     │
        └──────┬───────┘
               │
        ┌──────┴───────┐
        │ SUM TOTAL PL1│───(i)
        │  IN RANGE(I) │
        └──────┬───────┘
               │
        ┌──────┴───────┐
        │ SUM TOTAL PL2│───(j)
        │  IN RANGE(II)│
        └──────┬───────┘
               │
┌────────────┐ ┌──────┴───────┐
│SHIFT=SHIFT-Δx│ │ Qj = PL1+PL2 │───(k)
│  j=j+1     │ └──────┬───────┘
└────────────┘        │
        >    ╱────────┴────────╲
      ┌──────┤    Qj-1 : Qj     │
      │      ╲────────┬────────╱
      │               │ ≤
      │      ╱────────┴────────╲          YES
      │      │ WITHIN TOLERANCE?├──────────────┐
      │      ╲────────┬────────╱          (ℓ)  │
      │               │ NO                      │
      │      ┌────────┴────────┐      ┌────────┴──────┐
      │      │  Δxx = Δxx/10   │      │ OFFSET= SHIFT │
      └──────┤ SHIFT=SHIFT + 2Δxx│    └────────┬──────┘
             └─────────────────┘               │
                                       ┌────────┴──────┐
                                       │    RETURN     │
                                       └───────────────┘
```

# EP 0 126 388 B1

## FIG. 11

## FIG. 12

## FIG. 13A

START    POWER ON

INPUT OF CURVED SURFACE CONSTANT, CORRECTION PATTEN TABLE

JUDGEMENT OF CONTROL STAGE — I    WORKING

MEASURING

INPUT OF MEASURING INSTRUCTION INFORM. — V

INPUT OF WORKING INSTRUCTION INFORM. — II

CONTROL OF MEASURING — VI

CORRECTION CUTTING TOOL PATH INSTRUCTION — III

DETECTION OF POSITION, DISPLACEMENT — VII

WORKING CONTROL — IV

GIVEN TIMES? — VIII    NO

YES

CALCULATION OF OFFSET OF MEASURING ORIGIN — IX

WITHIN TOLERANCE? — X    YES

NO

XXII

RESET OF MACHINE FOR MEASURING

REJECTION OF OFFSET OF MEASURING ORIGIN — XI

FIGURE ERRORS WITHIN TOLERANCE? — X'    YES    END

# FIG. 13B